# EUROPEAN PATENT APPLICATION

(11) **EP 4 414 747 A1**
(43) Date of publication of application: **14.08.2024**
(21) Application number: 21961072.2
(22) Date of filing: 22.10.2021
(51) Int. Cl.: G01S 17/06

(54) **DETECTION SYSTEM AND TERMINAL DEVICE**

(71) Applicant: Huawei Technologies Co., Ltd., Shenzhen, Guangdong 518129 (CN)
(72) Inventor: LIU, Tonghui, Shenzhen, Guangdong 518129 (CN); LI, Menglin, Shenzhen, Guangdong 518129 (CN); WU, Hongying, Shenzhen, Guangdong 518129 (CN)
(74) Representative: Epping - Hermann - Fischer
(86) International application number: PCT/CN2021/125805
(87) International publication number: WO 2023/065327

(57) **Abstract**

Embodiments of this application disclose a detection system and a terminal device. The detection system includes a beam splitting module, a polarization module, and a frequency mixer. The beam splitting module is configured to perform beam splitting processing on an input signal light to obtain a first signal light and a second signal light. The polarization module is configured to: output a transmitted signal light obtained after at least first polarization processing is performed on the first signal light; and obtain a reflected signal light of the transmitted signal light, and output a third signal light obtained after at least second polarization processing is performed on the reflected signal light. The frequency mixer is configured to perform frequency mixing processing on the second signal light and the third signal light, or is configured to perform frequency mixing processing on the third signal light and a fourth signal light obtained after at least third polarization processing is performed on the second signal light. In this way, impact of crosstalk can be effectively reduced. In addition, the polarization module itself causes less crosstalk.

## Description

### TECHNICAL FIELD

This application relates to the field of laser detection, and in particular, to a detection system and a terminal device.

### BACKGROUND

Lidars can be classified into direct detection Lidars and coherent Lidars according to different detection methods. The direct detection Lidar is a Lidar that uses a direct detection method. The coherent detection Lidar is a Lidar that uses a coherent detection method. The direct detection Lidar multiplies a measured time delay difference between reflecting and receiving an optical pulse by the speed of light, to obtain distance information. However, the direct detection Lidar requires a detector with high sensitivity and a transmit pulse signal with a high peak power, and is greatly affected by noise. In contrast, the coherent Lidar uses a continuous light as a detection signal, and obtains a frequency, a magnitude, and phase information of the signal by mixing a local oscillator light and a signal light, which has advantages such as high detection efficiency, resistance to ambient light interference, and real-time acquisition of speed information.

For a coherent detection system (for example, the coherent Lidar), because of its detection advantage on a weak signal, crosstalk has greater impact on the coherent detection system than on the direct detection Lidar. In the coherent detection system, a control level of crosstalk directly affects its detection capability and accuracy. Therefore, it is necessary to study how to reduce the impact of crosstalk in coherent detection.

### SUMMARY

This application discloses a detection system and a terminal device, to effectively reduce impact of crosstalk in the detection system.

According to a first aspect, an embodiment of this application provides a detection system, including: a beam splitting module, a polarization module, and a frequency mixer. The beam splitting module is configured to perform beam splitting processing on an input signal light to obtain a first signal light and a second signal light. The polarization module is configured to: output a transmitted signal light obtained after at least first polarization processing is performed on the first signal light; and obtain a reflected signal light of the transmitted signal light, and output a third signal light obtained after at least second polarization processing is performed on the reflected signal light. The frequency mixer is configured to perform frequency mixing processing on the second signal light and the third signal light, or is configured to perform frequency mixing processing on the third signal light and a fourth signal light obtained after at least third polarization processing is performed on the second signal light.

In this embodiment of this application, the polarization module is configured to output the transmitted signal light obtained after at least the first polarization processing is performed on the first signal light, and output the third signal light obtained after at least the second polarization processing is performed on the reflected signal light. The third signal light may be understood as a signal light obtained after at least the first polarization processing and at least the second polarization processing are performed on the first signal light. Only the third signal light and a crosstalk light whose polarization state is the same as a polarization state of the third signal light can be output to the frequency mixer. Because a crosstalk light whose polarization state is different from the polarization state of the third signal light cannot be output to the frequency mixer, impact of crosstalk can be effectively reduced. In addition, the polarization module itself causes less crosstalk.

In a possible implementation, the frequency mixer is a polarization frequency mixer, and a polarization state of the second signal light and the polarization state of the third signal light are orthogonal. Alternatively, the frequency mixer is a non-polarization frequency mixer, and a polarization state of the fourth signal light and the polarization state of the third signal light are the same.

In this implementation, the polarization module reduces crosstalk caused by a reflected light. That is, the crosstalk light does not enter the frequency mixer. Therefore, the frequency mixer performs frequency mixing processing on the second signal light and the third signal light or performs frequency mixing processing on the third signal light and the fourth signal light, so that frequency mixing efficiency can be improved, and impact of a non-ideal factor such as depolarization can be reduced.

In a possible implementation, the polarization module includes: a polarization transformation module and a unidirectional conduction component. The unidirectional conduction component is configured to output the first signal light to the polarization transformation module, and is configured to output the third signal light to the frequency mixer. The polarization transformation module is configured to perform the first polarization processing on the first signal light, and is configured to perform the second polarization processing on the reflected signal light.

In this implementation, the unidirectional conduction component is configured to output, to the frequency mixer, the first signal light to the polarization transformation module, and output the third signal light, so as to avoid leakage of some signal lights to the frequency mixer.

In a possible implementation, the unidirectional conduction component is further configured to reflect, filter, or absorb a signal light in a first polarization state entering from a first direction. The first direction is an input direction of the third signal light, and the first polarization state is different from a polarization state of the third signal light.

In this implementation, the unidirectional conduction component is further configured to reflect, filter, or absorb the signal light in the first polarization state entering from the first direction. In this way, most crosstalk lights do not enter the frequency mixer, and impact of crosstalk can be effectively reduced.

In a possible implementation, the unidirectional conduction component is configured to reflect the third signal light from a first reflective surface to the frequency mixer; and/or the unidirectional conduction component is configured to reflect, from a second reflective surface, a signal light in a first polarization state entering from a first direction. The first reflective surface is different from the second reflective surface, and the first polarization state is different from a polarization state of the third signal.

In this implementation, the unidirectional conduction component is configured to reflect the third signal light from the first reflective surface to the frequency mixer; and/or the unidirectional conduction component is configured to reflect, from the second reflective surface, the signal light in the first polarization state entering from the first direction. In this way, the signal light in the first polarization state may be prevented from entering the frequency mixer, and a structure is simple.

In a possible implementation, the polarization transformation module includes an optical antenna and a first polarization transformation component. The optical antenna is configured to output, to the first polarization transformation component, a signal light obtained after at least collimation processing is performed on the first signal light, and is configured to output the third signal light to the unidirectional conduction component. The first polarization transformation component is configured to perform the first polarization processing on the first signal light obtained after the collimation processing, and is configured to output the third signal light obtained after the second polarization processing is performed on the reflected signal light. Alternatively, the first polarization transformation component is configured to output, to the optical antenna, a fifth signal light obtained after the first polarization processing is performed on the first signal light, and is configured to perform the second polarization processing on the reflected signal light. The optical antenna is configured to output the transmitted signal light obtained after at least collimation processing is performed on the fifth signal light.

In this implementation, the optical antenna performs collimation processing on the signal light, so that the signal light can be coupled into the first polarization transformation component with maximum efficiency or the signal light can be coupled and transmitted with maximum efficiency. In a possible implementation, the beam splitting module includes a beam splitter and a second polarization transformation component. The beam splitter is configured to perform beam splitting processing on an input signal light to obtain the first signal light and the second signal light. The second polarization transformation component is configured to output, to the frequency mixer, the fourth signal light obtained after at least the third polarization processing is performed on the second signal light. For example, the polarization state of the fourth signal light and the polarization state of the second signal light are orthogonal.

In this implementation, the second polarization transformation component is configured to output, to the frequency mixer, the fourth signal light obtained after at least the third polarization processing is performed on the second signal light, so that a signal light in a required polarization state can be output to the frequency mixer.

In a possible implementation, a polarization state of the first signal light and the polarization state of the second signal light are the same.

In a possible implementation, the beam splitting module is a polarization beam splitter. A polarization state of the first signal light and the polarization state of the second signal light are orthogonal, and a polarization state of the signal light input by the beam splitting module and the polarization state of the first signal light are not orthogonal and not parallel.

In this implementation, the beam splitting module performs beam splitting processing on the input signal light to obtain the first signal light and the second signal light whose polarization states are orthogonal. In this way, it can be ensured that polarization states of a local oscillator light and the signal light that are input by the frequency mixer are the same, and frequency mixing efficiency can be improved. The structure is simple, and no additional polarization transformation component is required.

In a possible implementation, the beam splitter is a polarization beam splitter. The beam splitter is specifically configured to perform beam splitting processing and polarization state adjustment processing on an input signal light to obtain the first signal light and the second signal light. A polarization state of the first signal light and the polarization state of the second signal light are orthogonal, and a polarization state of the signal light input by the beam splitter and the polarization state of the first signal light are not orthogonal and not parallel.

In this implementation, the beam splitting module performs beam splitting processing and polarization state adjustment processing on the input signal light to obtain the first signal light and the second signal light whose polarization states are orthogonal. In this way, it can be ensured that polarization states of a local oscillator light and the signal light that are input by the frequency mixer are orthogonal, so as to implement frequency mixing processing by using the polarization frequency mixer.

In a possible implementation, a transmitting optical path and a receiving optical path in the detection system are arranged in a coaxial manner.

According to a second aspect, an embodiment of this application provides a Lidar system, including the detection system according to any one of the first aspect or the possible implementations of the first aspect.

According to a third aspect, an embodiment of this application provides a terminal device, including the detection system according to any one of the first aspect or the possible implementations of the first aspect.

According to a fourth aspect, an embodiment of this application provides a detection apparatus, including at least one laser, at least one detector, and the detection system according to any one of the first aspect or the possible implementations of the first aspect.

### BRIEF DESCRIPTION OF DRAWINGS

FIG. 1 is a schematic diagram of a structure of a detection system according to an embodiment of this application;
FIG. 2A to FIG. 2C show examples of a polarization state of a first signal light, a polarization state of a second signal light, and a polarization state of a third signal light according to an embodiment of this application;
FIG. 3A to FIG. 3D show examples of a polarization state of a first signal light, a polarization state of a second signal light, a polarization state of a third signal light, and a polarization state of a fourth signal light according to an embodiment of this application;
FIG. 4A to FIG. 4C show examples of a polarization state of a signal light input by a beam splitting module 10, a polarization state of a first signal light, a polarization state of a second signal light, and a polarization state of a third signal light according to an embodiment of this application;
FIG. 5A to FIG. 5C show examples of a polarization state of a signal light input by a beam splitting module 10, a polarization state of a first signal light, a polarization state of a second signal light, and a polarization state of a third signal light according to an embodiment of this application;
FIG. 6 is a schematic diagram of a structure of a polarization module according to an embodiment of this application;
FIG. 7 shows an example in which a unidirectional conduction component processes a third signal light entering from a first direction and a signal light in a first polarization state according to an embodiment of this application;
FIG. 8A and FIG. 8B are schematic diagrams of a structure of a polarization transformation module 602 according to an embodiment of this application;
FIG. 9 is a schematic diagram of a structure of a beam splitting module 10 according to an embodiment of this application;
FIG. 10 shows an example in which a transmitting optical path and a receiving optical path may be arranged in a coaxial manner according to an embodiment of this application;
FIG. 11 is a schematic diagram of a structure of another detection system according to an embodiment of this application;
FIG. 12 is a schematic diagram of a structure of another detection system according to an embodiment of this application;
FIG. 13 is a schematic diagram of a structure of another detection system according to an embodiment of this application;
FIG. 14 is a schematic diagram of a structure of another detection system according to an embodiment of this application;
FIG. 15A and FIG. 15B show examples of test results of a coaxial transceiver detection system using a non-polarization component (a circulator) as a non-reciprocal component; and
FIG. 16A and FIG. 16B show examples of test results of a coaxial transceiver detection system using a polarization component as a non-reciprocal component.

### DESCRIPTION OF EMBODIMENTS

As described in the background, it is currently necessary to study how to reduce impact of crosstalk in a detection system. This application provides a detection system that can effectively reduce impact of crosstalk. In addition, the detection system provided in this application can further reduce crosstalk caused by a component included in the detection system.

For better understanding of a Lidar provided in this application, the following describes some knowledge related to the Lidar.

### Coaxial optical system and side-axis optical system

Based on different layouts of a transmitting optical path and a receiving optical path in the Lidar, two basic optical systems can be included: coaxial and side-axis optical systems. In the coaxial optical system, an axis of a transmitted light beam and an axis of the receiving optical path are located or partially located on the same optical axis. The coaxial optical system has a simple structure and high transmitting and receiving efficiency, but is easily affected by near-field backscattered light. In the side-axis (also referred to as dual-axis) optical system, a laser beam is separated from a receiver optical axis, and a transmitted light beam can only overlap a received field of view within a specific range. The side-axis system is not easily affected by near-field backscattering, but there are short-range blind spots.

In a coaxial transceiver optical system with a simple structure, various types of crosstalk are often introduced. Some of the crosstalk is caused by a component such as a circulator, and some is caused by a stray light in the environment. The crosstalk introduced by the component itself accounts for a major proportion.

In a coherent detection system using the coaxial optical system, a reflected light introduces a signal that is far greater than a target reflected light (namely, a required signal light) through a component. After the reflected light is mixed with a local oscillator light, detection of a short-range signal is greatly affected, and a noise level in a long-range is raised. In other words, in the coherent detection system using the coaxial optical system, impact of crosstalk is more severe.

The following describes an example of a detection system provided in this application with reference to accompanying drawings.

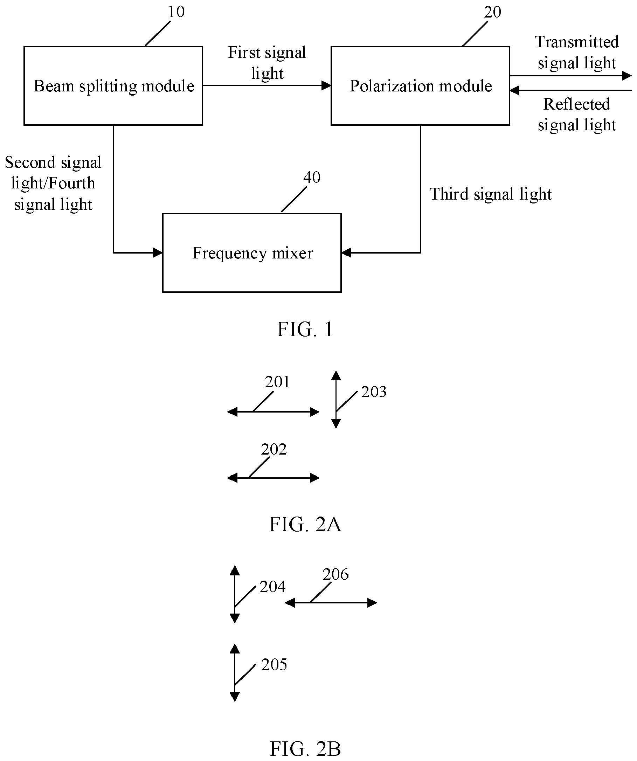

FIG. 1 is a schematic diagram of a structure of a detection system according to an embodiment of this application. As shown in FIG. 1, the detection system includes a beam splitting module 10, a polarization module 20, and a frequency mixer 40. In some embodiments, functions of the beam splitting module 10, the polarization module 20, and the frequency mixer 40 are as follows.

The beam splitting module 10 is configured to perform beam splitting processing on an input signal light to obtain a first signal light and a second signal light.

The polarization module 20 is configured to: output a transmitted signal light obtained after at least first polarization processing is performed on the first signal light; and obtain (or receive) a reflected signal light of the transmitted signal light, and output, to the frequency mixer 40, a third signal light obtained after at least second polarization processing is performed on the reflected signal light.

The frequency mixer 40 is configured to perform frequency mixing processing on the second signal light and the third signal light, or is configured to perform frequency mixing processing on the third signal light and a fourth signal light obtained after at least third polarization processing is performed on the second signal light.

In some embodiments, the beam splitting module 10 is further configured to output the first signal light to the polarization module 20, and output the second signal light to the frequency mixer 40. A polarization state of the third signal light and a polarization state of the second signal light are orthogonal, and the frequency mixer 40 is a polarization frequency mixer. In a possible implementation, the polarization state of the second signal light and a polarization state of the first signal light are the same, for example, are both horizontal polarization or vertical polarization. The polarization state of the third signal light and the polarization state of the first signal light are orthogonal.

FIG. 2A to FIG. 2C show examples of a polarization state of a first signal light, a polarization state of a second signal light, and a polarization state of a third signal light according to an embodiment of this application. In FIG. 2A, 201 represents the polarization state of the first signal light, 202 represents the polarization state of the second signal light, and 203 represents the polarization state of the third signal light. The polarization state of the second signal light and the polarization state of the first signal light are the same (both are horizontal polarization). The polarization state of the third signal light and the polarization state of the first signal light are orthogonal. The polarization state of the third signal light and the polarization state of the second signal light are orthogonal. In

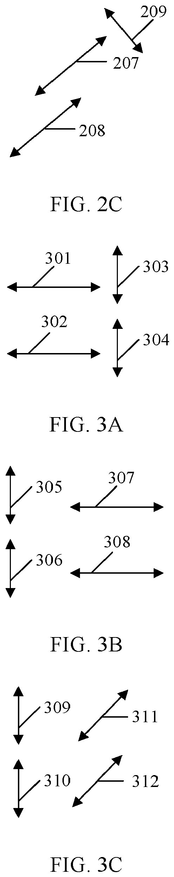

FIG. 2B, 204 represents the polarization state of the first signal light, 205 represents the polarization state of the second signal light, and 206 represents the polarization state of the third signal light. The polarization state of the second signal light and the polarization state of the first signal light are the same (both are vertical polarization). The polarization state of the third signal light and the polarization state of the first signal light are orthogonal. The polarization state of the third signal light and the polarization state of the second signal light are orthogonal. In FIG. 2C, 207 represents the polarization state of the first signal light, 208 represents the polarization state of the second signal light, and 209 represents the polarization state of the third signal light. The polarization state of the second signal light and the polarization state of the first signal light are the same (both are vertical polarization). The polarization state of the third signal light and the polarization state of the first signal light are orthogonal. The polarization state of the third signal light and the polarization state of the second signal light are orthogonal.

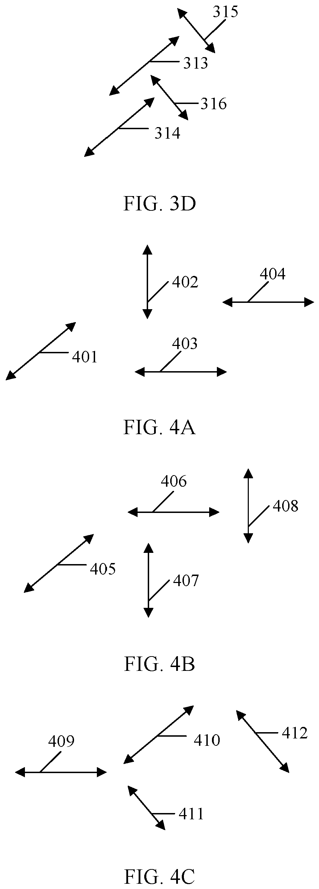

In some embodiments, the beam splitting module 10 is further configured to output the first signal light to the polarization module 20, and output, to the frequency mixer 40, the fourth signal light obtained after at least the third polarization processing is performed on the second signal light. A polarization state of the fourth signal light and the polarization state of the third signal light are the same, and the frequency mixer 40 is a non-polarization frequency mixer. In a possible implementation, the polarization state of the first signal light and the polarization state of the second signal light are the same, for example, are both horizontal polarization or vertical polarization. The polarization state of the third signal light and the polarization state of the first signal light are orthogonal. The polarization state of the third signal light and the polarization state of the second signal light are orthogonal. The polarization state of the second signal light and the polarization state of the fourth signal light are orthogonal. Performing, by the beam splitting module 10, at least the third polarization processing on the second signal light may be performing polarization transformation on the second signal light, for example, transforming the second signal light from a polarization state 1 to a polarization state 2, where the polarization state 1 and the polarization state 2 are orthogonal. For example, the beam splitting module 10 transforms the second signal light from horizontal polarization to vertical polarization, to obtain the fourth signal light. In a possible implementation, the polarization state of the first signal light and the polarization state of the second signal light are the same or different. The polarization state of the second signal light and the polarization state of the fourth signal light are not orthogonal and not parallel. The polarization state of the third signal light and the polarization state of the first signal light are not orthogonal and not parallel. In these embodiments, the polarization state of the first signal light, the polarization state of the second signal light, or the polarization state of the third signal light may not be limited as long as it is ensured that the polarization state of the third signal light and the polarization state of the fourth signal light are orthogonal. For example, the polarization state of the first signal light and the polarization state of the second signal light are the same, an included angle between the polarization state of the second signal light and the polarization state of the fourth signal light is 45 degrees, an included angle between the polarization state of the third signal light and the polarization state of the first signal light is 45 degrees, and the polarization state of the fourth signal light and the polarization state of the third signal light are the same. For another example, an included angle between the polarization state of the first signal light and the polarization state of the second signal light is 90 degrees, the included angle between the polarization state of the second signal light and the polarization state of the fourth signal light are 45 degrees, the included angle between the polarization state of the third signal light and the polarization state of the first signal light is 45 degrees, and the polarization state of the fourth signal light and the polarization state of the third signal light are the same. FIG. 3A to FIG. 3D show examples of a polarization state of a first signal light, a polarization state of a second signal light, a polarization state of a third signal light, and a polarization state of a fourth signal light according to an embodiment of this application. In FIG. 3A, 301 represents the polarization state of the first signal light, 302 represents the polarization state of the second signal light, 303 represents the polarization state of the third signal light, and 304 represents the polarization state of the fourth signal light. The polarization state of the first signal light and the polarization state of the second signal light are the same (both are horizontal polarization). The polarization state of the third signal light and the polarization state of the first signal light are orthogonal. The polarization state of the fourth signal light and the polarization state of the second signal light are orthogonal. The polarization state of the fourth signal light and the polarization state of the third signal light are the same. In FIG. 3B, 305 represents the polarization state of the first signal light, 306 represents the polarization state of the second signal light, 307 represents the polarization state of the third signal light, and 308 represents the polarization state of the fourth signal light. The polarization state of the first signal light and the polarization state of the second signal light are the same (both are vertical polarization). The polarization state of the third signal light and the polarization state of the first signal light are orthogonal. The polarization state of the fourth signal light and the polarization state of the second signal light are orthogonal. The polarization state of the fourth signal light and the polarization state of the third signal light are the same. In FIG. 3C, 309 represents the polarization state of the first signal light, 310 represents the polarization state of the second signal light, 311 represents the polarization state of the third signal light, and 312 represents the polarization state of the fourth signal light. The polarization state of the first signal light and the polarization state of the second signal light are the same (vertical polarization). The included angle between the polarization state of the third signal light and the polarization state of the first signal light is 45 degrees (which may be another angle). The included angle between the polarization state of the fourth signal light and the polarization state of the second signal light is 45 degrees (which may be another angle). The polarization state of the fourth signal light and the polarization state of the third signal light are the same. In FIG. 3D, 313 represents the polarization state of the first signal light, 314 represents the polarization state of the second signal light, 315 represents the polarization state of the third signal light, and 316 represents the polarization state of the fourth signal light. The polarization state of the first signal light and the polarization state of the second signal light are the same (non-vertical polarization or non-horizontal polarization). The polarization state of the third signal light and the polarization state of the first signal light are orthogonal. The polarization state of the fourth signal light and the polarization state of the second signal light are orthogonal. The polarization state of the fourth signal light and the polarization state of the third signal light are the same.

In some embodiments, the beam splitting module 10 is further configured to output the first signal light to the polarization module 20 and output the second signal light to the frequency mixer 40. The polarization state of the first signal light and the polarization state of the second signal light are orthogonal. The polarization state of the signal light input by the beam splitting module 10 and the polarization state of the first signal light (or the second signal light) are not orthogonal and not parallel. The polarization state of the second signal light and the polarization state of the third signal light are the same. The frequency mixer 40 is a non-polarization frequency mixer. In a possible implementation, the polarization state of the third signal light and the polarization state of the first signal light are orthogonal, for example, are both horizontal polarization or vertical polarization.

FIG. 4A to FIG. 4C show examples of a polarization state of a signal light input by a beam splitting module 10, a polarization state of a first signal light, a polarization state of a second signal light, and a polarization state of a third signal light according to an embodiment of this application. In FIG. 4A, 401 represents a polarization state of the signal light input by the beam splitting module 10 (namely, the input signal light of the beam splitting module), 402 represents the polarization state (vertical polarization) of the first signal light, 403 represents the polarization state (horizontal polarization) of the second signal light, and 404 represents the polarization state of the third signal light. The polarization state of the first signal light and the polarization state of the second signal light are orthogonal. The polarization state of the third signal light and the polarization state of the first signal light are orthogonal. The polarization state of the second signal light and the polarization state of the third signal light are the same. In FIG. 4B, 405 represents the polarization state of the signal light input by the beam splitting module 10 (namely, the input signal light of the beam splitting module), 406 represents the polarization state (horizontal polarization) of the first signal light, 407 represents the polarization state (vertical polarization) of the second signal light, and 408 represents the polarization state of the third signal light. The polarization state of the first signal light and the polarization state of the second signal light are orthogonal. The polarization state of the third signal light and the polarization state of the first signal light are orthogonal. The polarization state of the second signal light and the polarization state of the third signal light are the same. In FIG. 4C, 409 represents the polarization state (for example, horizontal polarization) of the signal light input by the beam splitting module 10 (namely, the input signal light of the beam splitting module), 410 represents the polarization state (non-vertical polarization or non-horizontal polarization) of the first signal light, 411 represents the polarization state of the second signal light, and 412 represents the polarization state of the third signal light. The polarization state of the first signal light and the polarization state of the second signal light are orthogonal. The polarization state of the third signal light and the polarization state of the first signal light are orthogonal. The polarization state of the second signal light and the polarization state of the third signal light are the same. A polarization angle between the input signal light of the beam splitting module and the first signal light may be 45 degrees, or may be another angle. This is not limited in this embodiment of this application.

In some embodiments, the beam splitting module 10 is further configured to output the first signal light to the polarization module 20, and output, to the frequency mixer 40, the fourth signal light obtained after at least the third polarization processing is performed on the second signal light. The polarization state of the fourth signal light and the polarization state of the third signal light are orthogonal, and the frequency mixer 40 is a polarization frequency mixer. In these embodiments, the polarization state of the first signal light and the polarization state of the second signal light are orthogonal. The polarization state of the signal light input by the beam splitting module 10 and the polarization state of the first signal light (or the second signal light) are not orthogonal and not parallel. The polarization state of the second signal light and the polarization state of the fourth signal light are orthogonal. The polarization state of the third signal light and the polarization state of the first signal light are orthogonal.

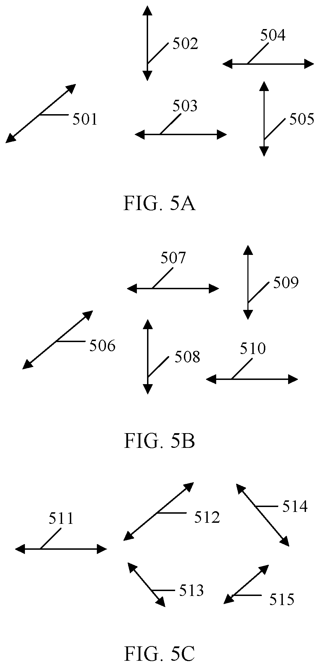

FIG. 5A to FIG. 5C show examples of a polarization state of a signal light input by a beam splitting module 10, a polarization state of a first signal light, a polarization state of a second signal light, a polarization state of a third signal light, and a polarization state of a fourth signal light according to an embodiment of this application. In FIG. 5A, 501 represents the polarization state of the signal light input by the beam splitting module 10 (namely, the input signal light of the beam splitting module), 502 represents the polarization state (vertical polarization) of the first signal light, 503 represents the polarization state (horizontal polarization) of the second signal light, 504 represents the polarization state of the third signal light, and 505 represents the polarization state of the fourth signal light. The polarization state of the first signal light and the polarization state of the second signal light are orthogonal. The polarization state of the third signal light and the polarization state of the first signal light are orthogonal. The polarization state of the fourth signal light and the polarization state of the second signal light are orthogonal. In FIG. 5B, 506 represents the polarization state of the signal light input by the beam splitting module 10 (namely, the input signal light of the beam splitting module), 507 represents the polarization state (horizontal polarization) of the first signal light, 508 represents the polarization state (vertical polarization) of the second signal light, 509 represents the polarization state of the third signal light, and 510 represents the polarization state of the fourth signal light. The polarization state of the first signal light and the polarization state of the second signal light are orthogonal. The polarization state of the third signal light and the polarization state of the first signal light are orthogonal. The polarization state of the fourth signal light and the polarization state of the second signal light are orthogonal. In FIG. 5C, 511 represents the polarization state (for example, horizontal polarization) of the signal light input by the beam splitting module 10 (namely, the input signal light of the beam splitting module), 512 represents the polarization state (non-vertical polarization or non-horizontal polarization) of the first signal light, 513 represents the polarization state of the second signal light, 514 represents the polarization state of the third signal light, and 515 represents the polarization state of the fourth signal light. The polarization state of the first signal light and the polarization state of the second signal light are orthogonal. The polarization state of the third signal light and the polarization state of the first signal light are orthogonal. The polarization state of the fourth signal light and the polarization state of the second signal light are orthogonal.

In some embodiments, both the first signal light and the third signal light are linearly polarized lights, and both the transmitted signal light obtained after at least the first polarization processing is performed on the first signal light and the reflected signal light of the transmitted signal light are circularly polarized lights or elliptically polarized lights. The fourth signal light may be a linearly polarized light. In some embodiments, the polarization module has a function of selecting a polarized light, namely, a function of outputting only a signal light (for example, the third signal light) in a specific polarization state to the frequency mixer, and not outputting a signal light in another polarization state to the frequency mixer.

In the detection system provided in this application, the polarization module is configured to: output the transmitted signal light obtained after at least the first polarization processing is performed on the first signal light; and obtain (or receive) the reflected signal light of the transmitted signal light, and output, to the frequency mixer 40, the third signal light obtained after at least the second polarization processing is performed on the reflected signal light. Because a crosstalk light whose polarization state is different from the polarization state of the third signal light cannot be output to the frequency mixer, impact of crosstalk of the reflected light can be effectively reduced. To be specific, only the third signal light and a crosstalk light whose polarization state is the same as the polarization state of the third signal light are output by the polarization module to the frequency mixer (that is, the polarization module outputs only a signal light in a specific polarization state to the frequency mixer), and a crosstalk light in another polarization state cannot enter the frequency mixer. That is, most crosstalk lights cannot enter the frequency mixer. Therefore, impact of crosstalk can be effectively reduced.

The following describes a possible structure of the polarization module 20 with reference to the accompanying drawings.

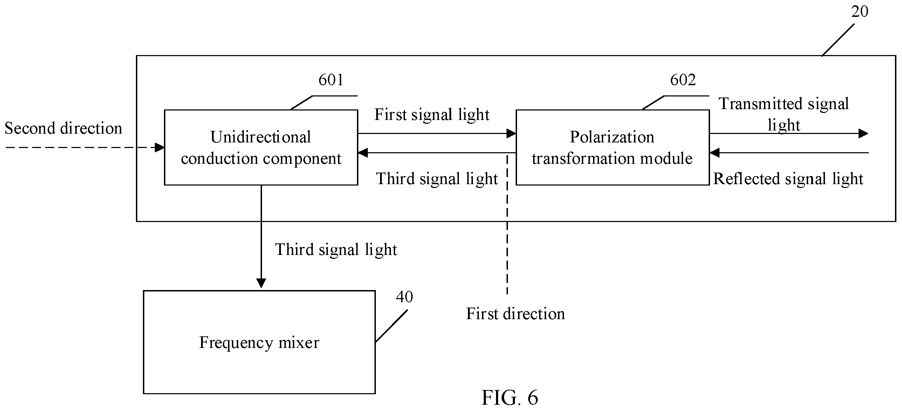

FIG. 6 is a schematic diagram of a structure of a polarization module according to an embodiment of this application. As shown in FIG. 6, the polarization module 20 includes a unidirectional conduction component 601 and a polarization transformation module 602. Functions of the unidirectional conduction component 601 and the polarization transformation module 602 are as follows.

The unidirectional conduction component 601 is configured to output the first signal light to the polarization transformation module, and is configured to output the third signal light to the frequency mixer 40.

The polarization transformation module 602 is configured to perform the first polarization processing on the first signal light, and is configured to perform the second polarization processing on the reflected signal light. The polarization transformation module 602 is further configured to output the transmitted signal light obtained after the first polarization processing is performed on the first signal light, and output, to the unidirectional conduction component 601, the third signal light obtained after the second polarization processing is performed on the reflected signal light. The polarization transformation module 602 is further configured to receive the reflected signal light.

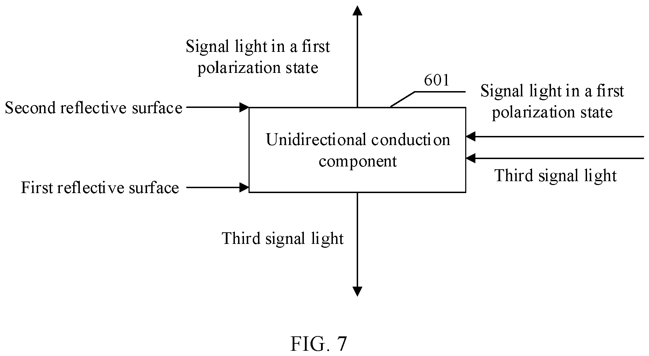

The unidirectional conduction component 601 may be a unidirectionally conductive non-reciprocal component. All signal lights entering the unidirectional conduction component 601 from the first direction are transmitted, filtered, or absorbed, that is, cannot pass through the unidirectional conduction component 601. A signal light entering the unidirectional conduction component 601 from the second direction can pass through the unidirectional conduction component 601. For example, the unidirectional conduction component 601 includes two input ends. A signal light input from one input end (corresponding to the first direction) is transmitted, filtered, or absorbed, and a signal light input from the other input end (corresponding to the second direction) passes through the unidirectional conduction component 601 and is output from an output end of the unidirectional conduction component 601. In some embodiments, the first signal light enters the unidirectional conduction component 601 from the second direction, and the unidirectional conduction component 601 outputs the first signal light to the polarization transformation module 602. The third signal light enters the unidirectional conduction component 601 from the first direction, and the unidirectional conduction component 601 inputs the third signal light to the frequency mixer 40. The unidirectional conduction component 601 is further configured to reflect, filter, or absorb a signal light in a first polarization state entering from the first direction. The first direction is an input direction of the third signal light, and the first polarization state is different from a polarization state of the third signal light. In other words, the signal light in the first polarization state entering the unidirectional conduction component 601 from the first direction is reflected, filtered, or absorbed by the unidirectional conduction component 601. That is, the signal light in the first polarization state is not output to the frequency mixer. It should be understood that the unidirectional conduction component 601 has a function of selecting a polarized light, namely, a function of outputting, to the frequency mixer, a signal light (for example, the third signal light) in a second polarization state entering from the first direction, and reflecting, filtering, or absorbing the signal light in the first polarization state entering from the first direction. The first polarization state is any polarization state different from the second polarization state. In other words, the unidirectional conduction component 601 outputs, to the frequency mixer, only the signal light (for example, the third signal light) in the second polarization state entering from the first direction, and a signal light in another polarization state (any polarization state different from the second polarization state) entering from the first direction cannot be output to the frequency mixer. For example, the unidirectional conduction component 601 is configured to reflect the third signal light from a first reflective surface to the frequency mixer, and reflect, from a second reflective surface, the signal light in the first polarization state entering from the first direction. The first reflective surface is different from the second reflective surface, and the first polarization state is different from the polarization state of the third signal. The unidirectional conduction component 601 may be a polarization optical splitter or a polarization light selection component, for example, a polarization beam splitter (polarization beam splitter, PBS). FIG. 7 shows an example in which a unidirectional conduction component processes a third signal light entering from a first direction and a signal light in a first polarization state according to an embodiment of this application. As shown in FIG. 7, the third signal light entering the unidirectional conduction component 601 from the first direction is reflected from the first reflective surface (an upper reflective surface in the figure) to the frequency mixer. The signal light in the first polarization state entering the unidirectional conduction component 601 from the first direction is reflected from the second reflective surface.

The polarization transformation module 602 is configured to output the transmitted signal light obtained after at least the first polarization processing is performed on the first signal light, receive the reflected signal light of the transmitted signal light, and output the third signal light obtained after at least the second polarization processing is performed on the reflected signal light. It can be learned that the polarization transformation module 602 performs at least the first polarization processing on the first signal light and at least the second polarization processing on the reflected signal light, to obtain the third signal light that can be output by the unidirectional conduction component 601 to the frequency mixer. The unidirectional conduction component 601 has a function of selecting a polarized light, namely, a function of outputting the third signal light entering from the first direction to the frequency mixer, and reflecting, filtering, or absorbing the signal light in the first polarization state entering from the second direction. In this way, only the third signal light (required target transmitted light) is output by the unidirectional conduction component 601 to the frequency mixer, and a crosstalk light is not output to the frequency mixer. Therefore, impact of crosstalk can be effectively reduced.

The following describes a possible structure of the polarization transformation module 602 with reference to the accompanying drawings.

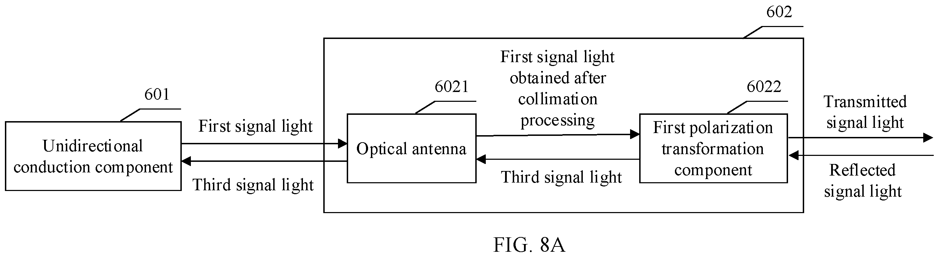

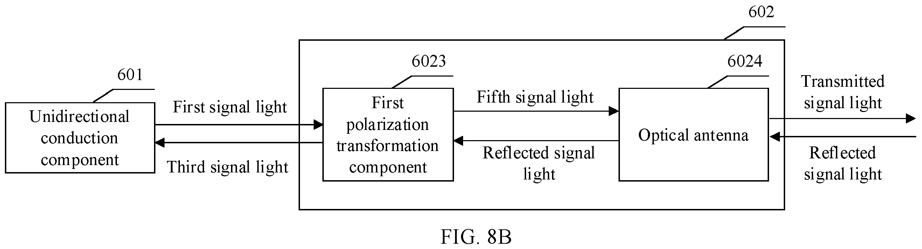

FIG. 8A and FIG. 8B are schematic diagrams of a structure of a polarization transformation module 602 according to an embodiment of this application. As shown in FIG. 8A, the polarization transformation module 602 includes an optical antenna 6021 and a first polarization transformation component 6022. A first signal light output by the unidirectional conduction component 601 enters the optical antenna.

In some embodiments, functions of the optical antenna 6021 and the first polarization transformation component 6022 are as follows.

The optical antenna 6021 is configured to output, to the first polarization transformation component, a signal light obtained after at least collimation processing is performed on the first signal light, and is configured to output the third signal light to the unidirectional conduction component.

The first polarization transformation component 6022 is configured to perform the first polarization processing on the first signal light obtained after the collimation processing, and is configured to output the third signal light obtained after the second polarization processing is performed on the reflected signal light.

The first polarization transformation component 6022 may be further configured to receive the reflected signal light, and output the third signal light to the optical antenna 6021. The first polarization transformation component 6022 may be further configured to output the transmitted signal light obtained after the first polarization processing is performed on the first signal light obtained after the collimation processing. The optical antenna 6021 may include a collimator. For example, the optical antenna 6021 includes a camera lens including one or more lenses. The optical antenna 6021 may collimate the first signal light, that is, collimate an input light beam. The first polarization transformation component 6022 may be a quarter-wave plate or another. In some embodiments, the first polarization transformation component 6022 has the following characteristic: A light beam (any linearly polarized light) may be transformed from a linearly polarized light (for example, the first signal light) to a circularly polarized light or elliptically polarized light after passing through the first polarization transformation component 6022 one time (or once), and may be transformed from a polarization state to another polarization state orthogonal to the polarization state after passing through the first polarization transformation component 6022 twice (outputting light and returning light). The third signal light may be considered as a signal light obtained after the first signal light passes through the first polarization transformation component 6022 twice: The first polarization transformation component 6022 performs the first polarization processing on the first signal light obtained after the collimation processing to output the transmitted signal light, and then the second polarization processing is performed on the reflected signal light to output the third signal light. A polarization state of the transmitted signal light and a polarization state of the reflected signal light are the same.

As shown in FIG. 8B, the polarization transformation module 602 includes a first polarization transformation component 6023 and an optical antenna 6024. A first signal light output by the unidirectional conduction component 601 enters the first polarization transformation component 6023.

In some embodiments, functions of the first polarization transformation component 6023 and the optical antenna 6024 are as follows.

The first polarization transformation component 6023 is configured to output, to the optical antenna 6024, a fifth signal light obtained after the first polarization processing is performed on the first signal light, and is configured to perform the second polarization processing on the reflected signal light.

The optical antenna 6024 is configured to output the transmitted signal light obtained after at least collimation processing is performed on the fifth signal light.

The optical antenna 6024 may be further configured to receive a reflected signal light, and output the reflected signal light to the first polarization transformation component 6023. The first polarization transformation component 6023 may be configured to output, to the unidirectional conduction component 601, the third signal light obtained after the second polarization processing is performed on the reflected signal light.

The optical antenna 6024 may include a collimator. For example, the optical antenna 6024 is a camera lens including one or more lenses. The optical antenna 6024 may collimate the fifth signal light, that is, collimate an input light beam. The first polarization transformation component 6023 may be a quarter-wave plate or another. In some embodiments, the first polarization transformation component 6023 has the following characteristic: A light beam (any linearly polarized light) may be transformed from a linearly polarized light (for example, the first signal light) to a circularly polarized light or elliptically polarized light after passing through the first polarization transformation component 6023 one time (or once), and may be transformed from a polarization state to another polarization state orthogonal to the polarization state after passing through the first polarization transformation component 6023 twice (output light and return light). The third signal light may be considered as a signal light obtained after the first signal light passes through the first polarization transformation component 6023 twice: the first polarization transformation component 6023 performs the first polarization processing on the first signal light to output the fifth signal light, and then the second polarization processing is performed on the reflected signal light to output the third signal light. A polarization state of the transmitted signal light and a polarization state of the reflected signal light are the same.

A function of the optical antenna in the polarization transformation module 602 is to enable a signal light to be coupled into a required component with maximum efficiency. In this embodiment of this application, the optical antenna 6024 performs collimation processing on the signal light, so that the signal light can be coupled into the first polarization transformation component 6023 with maximum efficiency or the signal light can be coupled and transmitted out of the detection system with maximum efficiency.

The following describes a possible structure of the beam splitting module 10 with reference to the accompanying drawings.

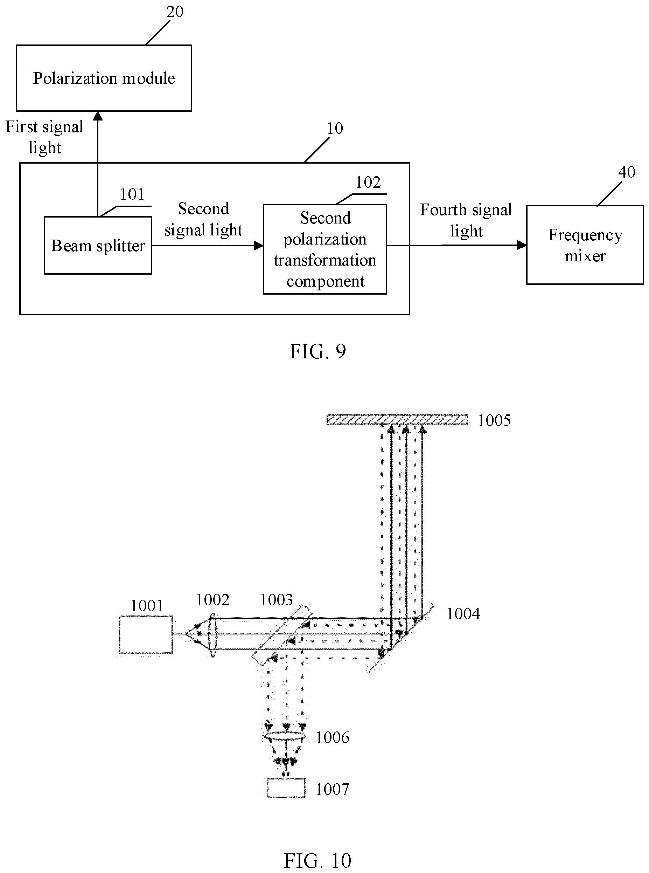

FIG. 9 is a schematic diagram of a structure of a beam splitting module 10 according to an embodiment of this application. As shown in FIG. 9, the beam splitting module 10 includes a beam splitter 101 and a second polarization transformation component 102.

The beam splitter 101 is configured to perform beam splitting processing on an input signal light to obtain the first signal light and the second signal light.

The second polarization transformation component 102 is configured to output, to the frequency mixer, the fourth signal light obtained after at least the third polarization processing is performed on the second signal light.

In some embodiments, the polarization state of the first signal light and the polarization state of the second signal light are the same, and the polarization state of the fourth signal light and the polarization state of the second signal light are orthogonal. The beam splitter 101 is specifically configured to perform beam splitting processing on the input signal light to obtain the first signal light and the second signal light, output the first signal light to the polarization module 20, and output the second signal light to the second polarization transformation component 102. It should be understood that the beam splitter 101 performs beam splitting processing on an incident light of the beam splitter 101 according to a specific proportion. One enters the polarization module 20 as a signal light, and the other enters the second polarization transformation component 102 as a local oscillator light. In actual application, a proportion of beam splitting processing performed by the beam splitter 101 may be configured according to an actual requirement, namely, a proportion of signal lights and a proportion of local oscillator lights. A function of the second polarization transformation component 102 is to perform polarization transformation on a signal light (for example, the second signal light) input by the second polarization transformation component 102. In other words, the second polarization transformation component 102 is configured to transform the polarization state of the second signal light (the local oscillator light), for example, transform the polarization state of the second signal light (namely, the local oscillator light) by 90 degrees. For example, the second polarization transformation component 102 transforms the second signal light from horizontal polarization to vertical polarization, to obtain the fourth signal light. The second polarization transformation component 102 may be a half-wave plate or another. In these embodiments, the second polarization transformation component 102 is configured to output, to the frequency mixer, the fourth signal light obtained after at least the third polarization processing is performed on the second signal light, so that the frequency mixer performs frequency mixing processing on the local oscillator light (namely, the fourth signal light) and the third signal light. In some embodiments, the beam splitter 101 is a polarization beam splitter. The polarization state of the first signal light and the polarization state of the second signal light are orthogonal, and the polarization state of the signal light input by the beam splitter 101 and the polarization state of the first signal light are not orthogonal and not parallel. The beam splitter 101 may be configured to perform beam splitting processing and polarization state adjustment processing (for example, adjusting the polarization state of the signal light) on the input signal light to obtain first signal light and second signal light, output the first signal light to the polarization module 20, and output the second signal light to the second polarization transformation component 102. It is assumed that light is propagated toward paper, and vertical polarization may be defined as a polarization state 1, and horizontal polarization may be defined as a polarization state 2. A polarization state of an optical signal incident to the beam splitter 101 is the polarization state 3 that forms a specific angle (for example, 1° to 89°) with each of the polarization state 1 and the polarization state 2. Based on a feature of the polarization beam splitter, the beam splitter 101 may adjust a split ratio of a signal path (corresponding to the signal light) to a local oscillator path (corresponding to the local oscillator light) based on specific angles formed between the polarization state 3 and the polarization state 1, and between the polarization state 3 and the polarization state 2, to implement a function of the beam splitter. For example, the beam splitter 101 adjusts a specific angle of the polarization state 3 (namely, polarization state adjustment processing), so that a large proportion of light is used as the signal light and enters the polarization module 20 in the polarization state 1 (corresponding to the first signal light). The beam splitter 101 adjusts a specific angle of the polarization state 3, so that a small proportion of light is used as the local oscillator light and enters the second polarization transformation component 102 in the polarization state 2 (corresponding to the second signal light). The second polarization transformation component 102 is configured to output, to the frequency mixer, the fourth signal light obtained after at least the third polarization processing is performed on the second signal light. In these embodiments, the beam splitter 101 performs beam splitting processing and polarization state adjustment processing on the input signal light to obtain the first signal light and the second signal light whose polarization states are orthogonal, and the second polarization transformation component 102 outputs, to the frequency mixer, the fourth signal light obtained after at least the third polarization processing is performed on the second signal light, so that the polarization states of the local oscillator light and the signal light that are input by the frequency mixer are orthogonal. It should be understood that, when the frequency mixer 40 is a polarization frequency mixer, the beam splitter 101 in the beam splitting module 10 is a polarization beam splitter. In this way, polarization states of the local oscillator light and the signal light that are input by the frequency mixer may be orthogonal.

In some embodiments, the beam splitting module 10 is a beam splitter, and the polarization state of the first signal light and the polarization state of the second signal light are the same. The beam splitting module 10 is specifically configured to perform beam splitting processing on the input signal light to obtain the first signal light and the second signal light, output the first signal light to the polarization module 20, and output the second signal light to the frequency mixer 40. The beam splitter 101 may perform beam splitting processing on an incident light of the beam splitter 101 according to a specific proportion. One enters the polarization module 20 as a signal light, and the other enters the frequency mixer as a local oscillator light. In actual application, a proportion of beam splitting processing performed by the beam splitting module 10 may be configured according to an actual requirement, namely, a proportion of signal lights and a proportion of local oscillator lights. In these embodiments, the beam splitting module 10 only needs to perform beam splitting processing on the input signal light to obtain the first signal light and the second signal light. A structure is simple and costs are low.

In some embodiments, the beam splitting module 10 is a polarization beam splitter. The polarization state of the first signal light and the polarization state of the second signal light are orthogonal, and the polarization state of the signal light input by the beam splitting module 10 and the polarization state of the first signal light are not orthogonal and not parallel. It is assumed that light is propagated toward paper, and vertical polarization may be defined as a polarization state 1, and horizontal polarization may be defined as a polarization state 2. A polarization state of an optical signal incident to the beam splitting module 10 is the polarization state 3 that forms a specific angle (for example, 1° to 89°) with each of the polarization state 1 and the polarization state 2. Based on a feature of the polarization beam splitter, the beam splitting module 10 may adjust a split ratio of a signal path (corresponding to the signal light) to a local oscillator path (corresponding to the local oscillator light) based on specific angles formed between the polarization state 3 and the polarization state 1, and between the polarization state 3 and the polarization state 2, to implement a function of the beam splitter. For example, the beam splitting module 10 adjusts a specific angle of the polarization state 3, so that a large proportion of light is used as the signal light and enters the polarization module 20 in the polarization state 1. The beam splitting module 10 adjusts a specific angle of the polarization state 3, so that a small proportion of light is used as the local oscillator light and enters the frequency mixer 40 in the polarization state 2. In this embodiment of this application, a large proportion may be a split ratio of more than 90%, and a small proportion may be a split ratio of less than 10%. It should be understood that an optical signal in the polarization state 3 is incident to the beam splitting module 10, a large proportion of signal lights split by the beam splitting module 10 are in the polarization state 1, and a small proportion of local oscillator lights are in the polarization state 2. In this embodiment of this application, the beam splitting module 10 performs beam splitting processing on the input signal light to obtain the first signal light and the second signal light whose polarization states are orthogonal. In this way, it can be ensured that polarization states of the local oscillator light and the signal light that are input by the frequency mixer are the same, and frequency mixing efficiency can be improved.

In some embodiments, a transmitting optical path and a receiving optical path in the detection system provided in this application may be arranged in a coaxial manner. The transmitting optical path and the receiving optical path are arranged in a coaxial manner, which is referred to as a coaxial optical system. The coaxial optical system has advantages such as a simple structure and high transmitting and receiving efficiency, but is easily affected by crosstalk and stray light. The detection system in these embodiments has a simple structure and high transmitting and receiving efficiency, and is not easily affected by crosstalk and stray light. FIG. 10 shows an example of a detection system in which a transmitting optical path and a receiving optical path are arranged in a coaxial manner according to an embodiment of this application. As shown in FIG. 10, 1001 represents an emitting light source, 1002 represents a collimation optical path, 1003 represents an optical splitter, 1004 represents a scanning mechanism, 1005 represents a target object, 1006 represents a focusing lens, and 1007 represents a detector. As shown in FIG. 10, a signal light transmitted by the emitting light source successively passes through the collimation optical path 1002 (or referred to as a collimator), the optical splitter 1003, and the scanning mechanism 1004, and reaches the target object. The signal light reflected by the target object successively passes through the scanning mechanism 1004, the optical splitter 1003, and the focusing lens 1006, and reaches the detector 1007. In this embodiment of this application, the transmitting optical path is an optical path from generation of a transmitted light (namely, a signal light transmitted by an emitting light source) to transmission of the transmitted light by the optical splitter 1003, and the receiving optical path is an optical path from reception of the reflected light by the scanning mechanism 1004 to transmission of the reflected light to the detector 1007. In FIG. 10, a solid arrow represents the transmitting optical path, and a dashed arrow represents the receiving optical path. It can be learned from FIG. 10 that the transmitting optical path and the receiving optical path may be arranged in a coaxial manner. In FIG. 10, the detection system may be a Lidar system, the transmitting light source 1001 may be a laser, and the detector 1007 may be a PIN detector, an APD detector, a balanced detector, or the like.

The foregoing describes a possible structure of the beam splitting module 10 and a possible structure of the polarization module 20. The following describes some possible examples of the detection system in FIG. 1 with reference to the accompanying drawings.

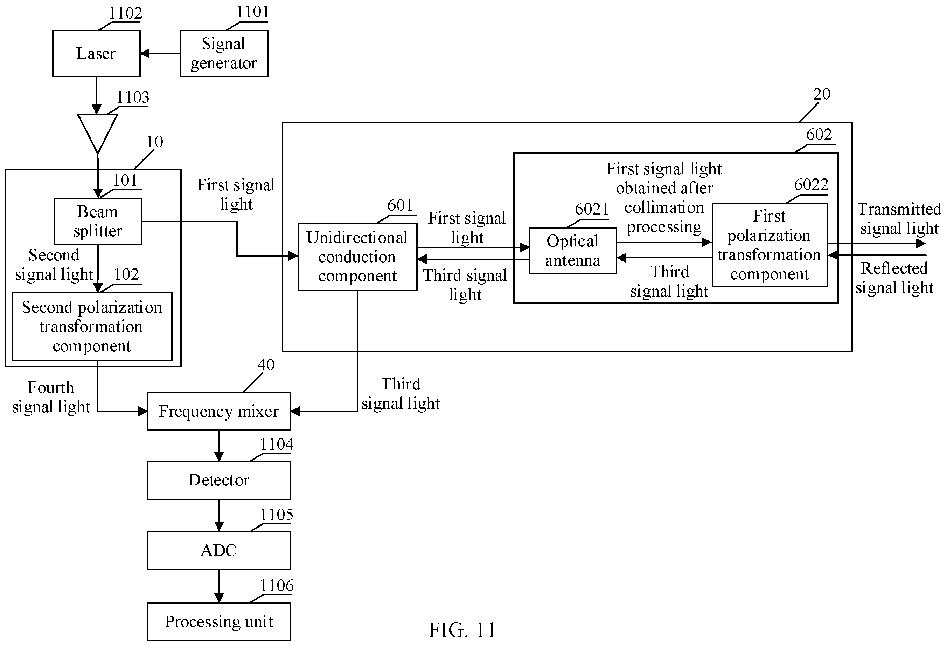

FIG. 11 is a schematic diagram of a structure of another detection system according to an embodiment of this application. The detection system in FIG. 11 is a possible implementation of the detection system in FIG. 1. As shown in FIG. 11, the detection system includes: a signal generator 1101, a laser 1102, an amplifier 1103, a beam splitter 101, a second polarization transformation component 102, a unidirectional conduction component 601, an optical antenna 6021, a first polarization transformation component 6022, a frequency mixer 40, a detector 1104, an analog-to-digital converter (analog to digital converter, ADC) 1105, and a processing unit 1106. It should be understood that the beam splitter 101 and the second polarization transformation component 102 correspond to the beam splitting module 10. In other words, a possible structure of the beam splitting module 10 includes the beam splitter 101 and the second polarization transformation component 102. The unidirectional conduction component 601, the optical antenna 6021, and the first polarization transformation component 6022 correspond to the polarization module 20. In other words, a possible structure of the polarization module 20 includes the unidirectional conduction component 601, the optical antenna 6021, and the first polarization transformation component 6022. It should be noted that, in a specific design and implementation of the detection system, any one or more components in FIG. 11 may be reduced or replaced. It may also be understood that in a specific implementation, the detection system may include one or more of all components shown in FIG. 11. A structure of the detection system is not specifically limited in this application. The following describes an example of functions of all components in FIG. 11.

The signal generator 1101 is configured to modulate the laser 1102. A modulation method of the laser 1102 may be direct modulation or external modulation performed by using a modulator, and a modulation mode may be frequency-modulated continuous wave, phase encoding, or the like. In some embodiments, a structure of the signal generator 1101 for modulating the laser 1102 may be alternative as follows: A laser signal output by the laser 1102 enters a modulator; and the modulator modulates the input laser signal, and outputs a modulated laser signal to the amplifier 1103. For example, the modulator modulates, based on a modulation signal input by the signal generator, the laser signal output by the laser 1102. That is, in some scenarios, the signal generator is optional. The laser 1102 is configured to output a laser signal to the amplifier 1103. The laser 1102 may be a narrow-linewidth laser, such as a semiconductor laser, a fiber laser, or a laser of another type. The amplifier 1103 is configured to amplify an input laser signal, and output an amplified laser signal to the beam splitter 101. The amplifier 1103 may be an optical amplifier, for example, an erbium-doped fiber amplifier (erbium doped fiber amplifier, EDFA), a semiconductor optical amplifier (semiconductor optical amplifier, SOA), or an optical amplifier of another type.

The beam splitter 101 is configured to: perform beam splitting processing on the amplified laser signal (hereinafter referred to as a signal light) to obtain a first signal light and a second signal light; and output the first signal light to the unidirectional conduction component 601, and output the second signal light to the second polarization transformation component 102. In other words, the amplified signal light is split into two by the beam splitter 101. One enters the unidirectional conduction component 601, and the other enters the second polarization transformation component 102 as a local oscillator light.

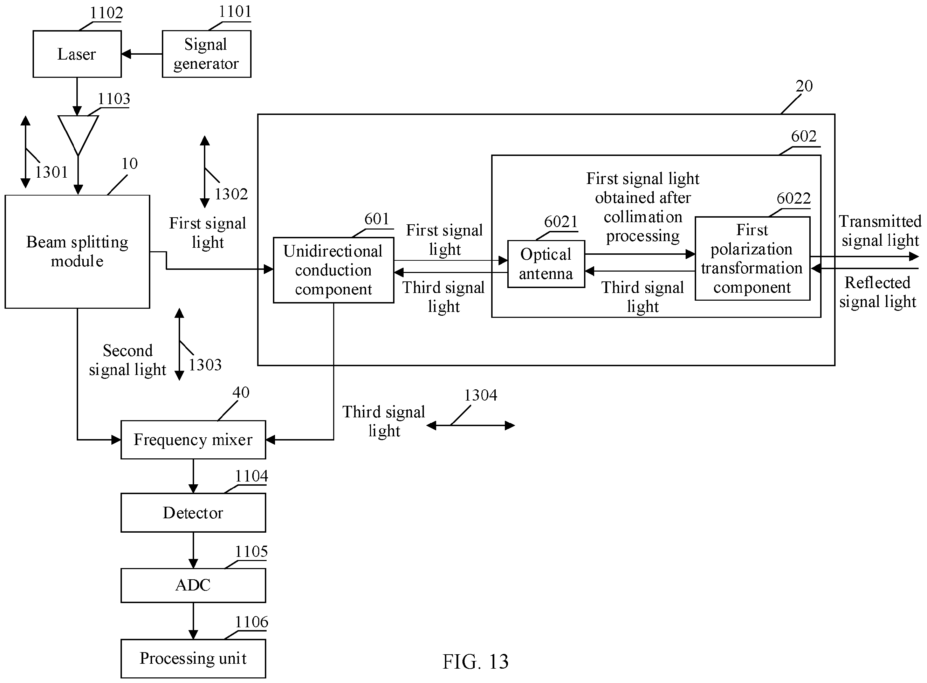

The second polarization transformation component 102 is configured to output, to the frequency mixer 40, the fourth signal light obtained after at least the third polarization processing is performed on the second signal light. For example, in some scenarios, the second polarization transformation component is optional. For details, refer to descriptions in FIG. 13.

The unidirectional conduction component 601 is configured to output the first signal light from the beam splitter 101 to the optical antenna 6021.

The optical antenna 6021 is configured to output, to the first polarization transformation component 6022, a signal light obtained after at least collimation processing is performed on the first signal light.

The first polarization transformation component 6022 is configured to: perform first polarization processing on the first signal light obtained after the collimation processing; output a transmitted signal light obtained after the first polarization processing is performed on the first signal light obtained after the collimation processing; receive a reflected signal light; and output, to the optical antenna 6021, a third signal light obtained after second polarization processing is performed on the reflected signal light. In other words, the first polarization transformation component 6022 is configured to perform the first polarization processing on the first signal light obtained after the collimation processing, and perform the second polarization processing on the reflected signal light. The reflected signal light is a signal light that is transmitted to any object and returned. The first signal light passes through the optical antenna 6021 and then passes through the first polarization transformation component 6022, and becomes a circularly polarized light or an elliptically polarized light (namely, the transmitted signal light), which is transmitted to any object to generate the reflected signal light. The reflected signal light returned by any object passes through the first polarization transformation component 6022 again, becomes the third signal light, and enters the optical antenna 6021.

The optical antenna 6021 is configured to output the third signal light to the unidirectional conduction component 601. After receiving the third signal light, the optical antenna 6021 sends the third signal light back to the unidirectional conduction component 601.

The unidirectional conduction component 601 is configured to output the third signal light to the frequency mixer 40. Because a polarization state of the first signal light has changed from a polarization state 1 to a polarization state 2, when the third signal light returns to the unidirectional conduction component 601, the third signal light does not return along an original path, but is reflected to the frequency mixer 40. The polarization state 1 is a polarization state of the first signal light, for example, vertical polarization. The polarization state 2 is a polarization state of the third signal light, for example, horizontal polarization.

The frequency mixer 40 is configured to perform frequency mixing processing on the fourth signal light (the local oscillator light) and the third signal light to obtain a mixed signal. A polarization state of the second signal light and the polarization state of the third signal light are the same. The frequency mixer 40 is a non-polarization frequency mixer component. Regardless of a depolarization effect of the signal light reflected by any object, polarization directions of two lights entering the frequency mixer 40, namely, the third signal light and the fourth signal light, are the same. In this application, that polarization states of two signal lights are the same means that polarization directions of the two signal lights are the same, and that the polarization states of the two signal lights are orthogonal means that the polarization directions of the two signal lights are orthogonal.

The detector 1104 is configured to detect the mixed signal obtained after the frequency mixer 40 performs the frequency mixing processing. The detector 1104 may be a PIN detector, an avalanche photodiode (avalanche photodiode, APD) detector, a single-photon avalanche diode (single-photon avalanche diode, SPAD) balanced detector, or another detector.

The ADC 1105 is configured to sample the mixed signal detected by the detector 1104, and send the sampled signal to the processing unit 1106. In other words, after being sampled by the ADC 1105, the mixed signal detected by the detector 1104 is sent to the processing unit 1106 for subsequent signal processing.

The processing unit 1106 is configured to perform subsequent signal processing on the sampled signal to obtain information such as a location and a speed of a detected object.

In a coaxial transceiver detection system (namely, a detection system using a coaxial optical system), various types of crosstalk are inevitably introduced. In an actual detection system, because of an optical lens and the like, the reflected light is transmitted back to the frequency mixer with a small loss to participate in frequency beating, causing a short-range peak. In addition, due to crosstalk of a component, some signal lights are directly leaked to the frequency mixer for coherence, interfering with short-range signal detection.

In the detection system provided in this embodiment of this application, a polarization component (namely, a polarization module) is used, to effectively reduce a problem of crosstalk caused by the reflected light and characteristics of the component. The detection system provided in this embodiment of this application is applicable to a "line-transmitting and line-receiving" Lidar system, an "area-transmitting and area-receiving" Lidar system, a "spot-transmitting and spot-receiving" Lidar system, or the like.

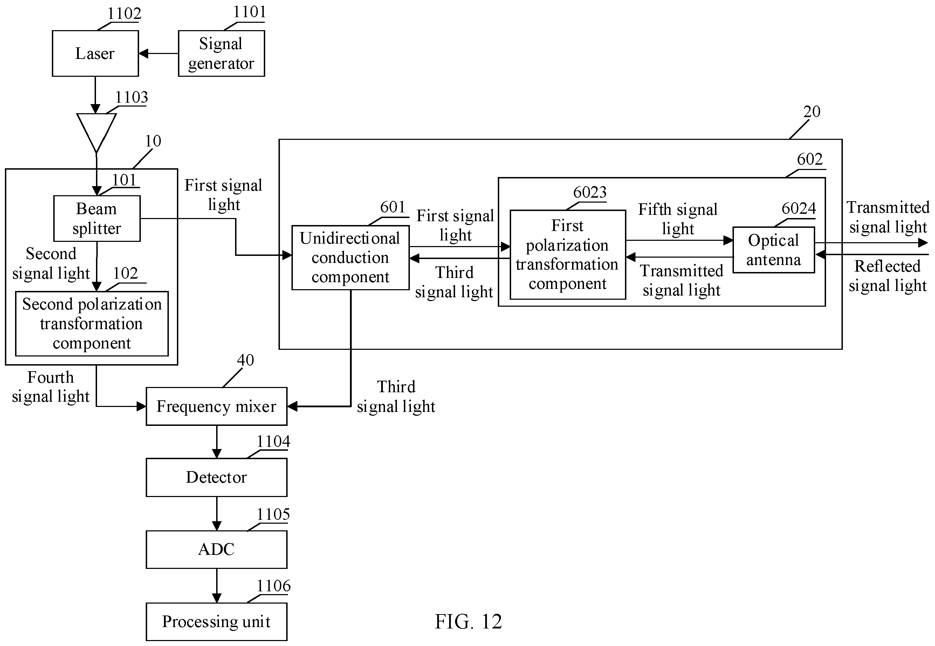

FIG. 12 is a schematic diagram of a structure of another detection system according to an embodiment of this application. The detection system in FIG. 12 is a possible implementation of the detection system in FIG. 1. As shown in FIG. 12, the detection system includes: a signal generator 1101, a laser 1102, an amplifier 1103, a beam splitter 101, a second polarization transformation component 102, a unidirectional conduction component 601, a first polarization transformation component 6023, an optical antenna 6024, a frequency mixer 40, a detector 1104, an ADC 1105, and a processing unit 1106. It should be understood that the beam splitter 101 and the second polarization transformation component 102 correspond to the beam splitting module 10. In other words, a possible structure of the beam splitting module 10 includes the beam splitter 101 and the second polarization transformation component 102. The unidirectional conduction component 601, the optical antenna 6021, and the first polarization transformation component 6022 correspond to the polarization module 20. In other words, a possible structure of the polarization module 20 includes the unidirectional conduction component 601, the first polarization transformation component 6023, and the optical antenna 6024. It should be noted that, in a specific design and implementation of the detection system, any one or more components in FIG. 12 may be reduced or replaced. It may also be understood that in a specific implementation, the detection system may include one or more of all components shown in FIG. 12. A structure of the detection system is not specifically limited in this application. The following describes an example of functions of all components in FIG. 12.

The signal generator 1101 is configured to modulate the laser 1102. A modulation method of the laser 1102 may be direct modulation or external modulation performed by using a modulator, and a modulation mode may be frequency-modulated continuous wave, phase encoding, or the like. In some embodiments, a structure of the signal generator 1101 for modulating the laser 1102 may be alternative as follows: A laser signal output by the laser 1102 enters a modulator; and the modulator modulates the input laser signal, and outputs a modulated laser signal to the amplifier 1103. For example, the modulator modulates, based on a modulation signal input by the signal generator, the laser signal output by the laser 1102.

The laser 1102 is configured to output a laser signal to the amplifier 1103. The laser 1102 may be a narrow-linewidth laser, such as a semiconductor laser, a fiber laser, or a laser of another type.

The amplifier 1103 is configured to amplify an input laser signal, and output an amplified laser signal to the beam splitter 101. The amplifier 1103 may be an optical amplifier, for example, an erbium-doped fiber amplifier (erbium doped fiber amplifier, EDFA), a semiconductor optical amplifier (semiconductor optical amplifier, SOA), or an optical amplifier of another type.

The beam splitter 101 is configured to: perform beam splitting processing on the amplified laser signal (hereinafter referred to as a signal light) to obtain a first signal light and a second signal light; and output the first signal light to the unidirectional conduction component 601, and output the second signal light to the second polarization transformation component 102. In other words, the amplified signal light is split into two by the beam splitter 101. One enters the unidirectional conduction component 601, and the other enters the second polarization transformation component 102 as a local oscillator light.

The second polarization transformation component 102 is configured to output, to the frequency mixer 40, the fourth signal light obtained after at least the third polarization processing is performed on the second signal light.

The unidirectional conduction component 601 is configured to output the first signal light from the beam splitter 101 to the first polarization transformation component 6023.

The first polarization transformation component 6023 is configured to output, to the optical antenna 6024, a fifth signal light obtained after first polarization processing is performed on the first signal light.

The optical antenna 6024 is configured to output a transmitted signal light obtained after at least collimation processing is performed on the fifth signal light; and receive a reflected signal light, and output the reflected signal light to the first polarization transformation component 6023. The first polarization transformation component 6023 is configured to: perform second polarization processing on the reflected signal light; and output, to the unidirectional conduction component 601, a third signal light obtained after the second polarization processing is performed on the reflected signal light.

The unidirectional conduction component 601 is configured to output the third signal light to the frequency mixer 40. Because a polarization state of the first signal light has changed from a polarization state 1 to a polarization state 2, when the third signal light returns to the unidirectional conduction component 601, the third signal light does not return along an original path, but is reflected to the frequency mixer 40. The polarization state 1 is a polarization state of the first signal light, for example, vertical polarization. The polarization state 2 is a polarization state of the third signal light, for example, horizontal polarization.

The frequency mixer 40 is configured to perform frequency mixing processing on the fourth signal light (the local oscillator light) and the third signal light to obtain a mixed signal. A polarization state of the second signal light and the polarization state of the third signal light are the same. The frequency mixer 40 is a non-polarization frequency mixer component. Regardless of a depolarization effect of the signal light transmitted by any object, polarization directions of two lights entering the frequency mixer 40, namely, the third signal light and the fourth signal light, are the same.

The detector 1104 is configured to detect the mixed signal obtained after the frequency mixer 40 performs the frequency mixing processing. The detector 1104 may be a PIN detector, an avalanche photodiode (avalanche photon diode, APD) detector, a balanced detector, or the like.

The ADC 1105 is configured to sample the mixed signal detected by the detector 1104, and send the sampled signal to the processing unit 1106. In other words, after being sampled by the ADC 1105, the mixed signal detected by the detector 1104 is sent to the processing unit 1106 for subsequent signal processing.

The processing unit 1106 is configured to perform subsequent signal processing on the sampled signal to obtain information such as a location and a speed of a detected object.

Through comparison between the detection system in FIG. 12 and the detection system in FIG. 11, it can be learned that the optical antenna in FIG. 11 performs at least the collimation processing on the first signal light output by the unidirectional conduction component 601, and sends the collimated signal light to the first polarization transformation component 6022; and the first polarization transformation component 6023 in FIG. 12 performs the first polarization processing on the first signal light output by the unidirectional conduction component 601, and outputs, to the optical antenna 6024, the fifth signal light obtained after the first polarization processing is performed on the first signal light.

FIG. 13 is a schematic diagram of a structure of another detection system according to an embodiment of this application. The detection system in FIG. 13 is a possible implementation of the detection system in FIG. 1. As shown in FIG. 13, the detection system includes: a signal generator 1101, a laser 1102, an amplifier 1103, a beam splitting module 10, a unidirectional conduction component 601, an optical antenna 6021, a first polarization transformation component 6022, a frequency mixer 40, a detector 1104, an ADC 1105, and a processing unit 1106. The beam splitting module 10 may be a beam splitter. The unidirectional conduction component 601, the optical antenna 6021, and the first polarization transformation component 6022 correspond to the polarization module 20. In other words, a possible structure of the polarization module 20 includes the unidirectional conduction component 601, the optical antenna 6021, and the first polarization transformation component 6022. In FIG. 13, 1301 represents a polarization direction of a signal light input by the beam splitting module 10, 1302 represents a polarization direction of a first signal light, 1303 represents a polarization direction of a second signal light, and 1304 represents a polarization direction of a third signal light. Functions of all components in FIG. 13 are as follows. The signal generator 1101 is configured to modulate the laser 1102. A modulation method of the laser 1102 may be direct modulation or external modulation performed by using a modulator, and a modulation mode may be frequency-modulated continuous wave, phase encoding, or the like. In some embodiments, a structure of the signal generator 1101 for modulating the laser 1102 may be alternative as follows: A laser signal output by the laser 1102 enters a modulator; and the modulator modulates the input laser signal, and outputs a modulated laser signal to the amplifier 1103. For example, the modulator modulates, based on a modulation signal input by the signal generator, the laser signal output by the laser 1102.

The laser 1102 is configured to output a laser signal to the amplifier 1103. The laser 1102 may be a narrow-linewidth laser, such as a semiconductor laser, a fiber laser, or a laser of another type. The amplifier 1103 is configured to amplify an input laser signal, and output an amplified laser signal to the beam splitter 101. The amplifier 1103 may be an optical amplifier, for example, an EDFA, an SOA, or an optical amplifier of another type.

The beam splitting module 10 is configured to: perform beam splitting processing on the amplified laser signal (hereinafter referred to as a signal light) to obtain the first signal light and the second signal light; and output the first signal light to the unidirectional conduction component 601, and output the second signal light to the frequency mixer 40. In other words, the amplified signal light is split into two by the beam splitting module 10. One enters the unidirectional conduction component 601, and the other enters the frequency mixer 40 as a local oscillator light. In this embodiment of this application, the polarization state of the first signal light and the polarization state of the second signal light are the same.

The unidirectional conduction component 601 is configured to output the first signal light from the beam splitting module 10 to the optical antenna 6021.

The optical antenna 6021 is configured to output, to the first polarization transformation component 6022, a signal light obtained after at least collimation processing is performed on the first signal light.

The first polarization transformation component 6022 is configured to: perform first polarization processing on the first signal light obtained after the collimation processing; output a transmitted signal light obtained after the first polarization processing is performed on the first signal light obtained after the collimation processing; receive a reflected signal light; and output, to the optical antenna 6021, a third signal light obtained after second polarization processing is performed on the reflected signal light. In other words, the first polarization transformation component 6022 is configured to perform the first polarization processing on the first signal light obtained after the collimation processing, and perform the second polarization processing on the reflected signal light. The reflected signal light is a signal light that is transmitted to any object and returned. The first signal light passes through the optical antenna 6021 and then passes through the first polarization transformation component 6022, and becomes a circularly polarized light or an elliptically polarized light (namely, the transmitted signal light), which is transmitted to any object to generate the reflected signal light. The reflected signal light returned by any object passes through the first polarization transformation component 6022 again, becomes the third signal light, and enters the optical antenna 6021.

The optical antenna 6021 is configured to output the third signal light to the unidirectional conduction component 601. In other words, after receiving the third signal light, the optical antenna 6021 sends the third signal light back to the unidirectional conduction component 601.

The unidirectional conduction component 601 is configured to output the third signal light to the frequency mixer 40. Because a polarization state of the first signal light has changed from a polarization state 1 to a polarization state 2, when the third signal light returns to the unidirectional conduction component 601, the third signal light does not return along an original path, but is reflected to the frequency mixer 40. The polarization state 1 is a polarization state of the first signal light, for example, vertical polarization. The polarization state 2 is a polarization state of the third signal light, for example, horizontal polarization.

The frequency mixer 40 is configured to perform frequency mixing on the second signal light (the local oscillator light) and the third signal light to obtain a mixed signal. The polarization state of the second signal light and the polarization state of the third signal light are orthogonal. The frequency mixer 40 is a polarization frequency mixer component. Regardless of a depolarization effect of the signal light transmitted by any object, polarization directions of two lights entering the frequency mixer 40, namely, the third signal light and the second signal light, are orthogonal.

The detector 1104 is configured to detect the mixed signal obtained after the frequency mixer 40 performs the frequency mixing processing. The detector 1104 may be a PIN detector, an avalanche photodiode (avalanche photon diode, APD) detector, a balanced detector, or the like.

The ADC 1105 is configured to sample the mixed signal detected by the detector 1104, and send the sampled signal to the processing unit 1106. In other words, after being sampled by the ADC 1105, the mixed signal detected by the detector 1104 is sent to the processing unit 1106 for subsequent signal processing.

The processing unit 1106 is configured to perform subsequent signal processing on the sampled signal to obtain information such as a location and a speed of a detected object.

Through comparison between the detection system in FIG. 13 and the detection system in FIG. 11, it can be learned that a structure of the beam splitting module 10 in FIG. 13 is different from a structure of the beam splitting module in FIG. 11.

In some embodiments, a structure of the polarization module 20 in FIG. 13 may be replaced with a structure of the polarization module 20 in FIG. 12.

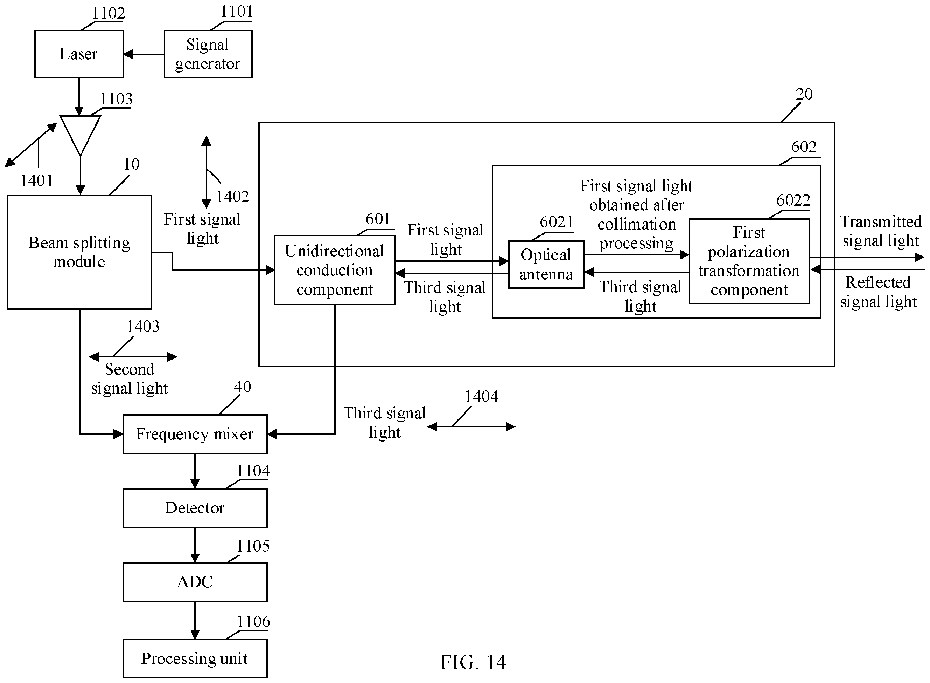

FIG. 14 is a schematic diagram of a structure of another detection system according to an embodiment of this application. The detection system in FIG. 14 is a possible implementation of the detection system in FIG. 1. As shown in FIG. 14, the detection system includes: a signal generator 1101, a laser 1102, an amplifier 1103, a beam splitting module 10, a unidirectional conduction component 601, an optical antenna 6021, a first polarization transformation component 6022, a frequency mixer 40, a detector 1104, an ADC 1105, and a processing unit 1106. The beam splitting module 10 may be a polarization beam splitter. The unidirectional conduction component 601, the optical antenna 6021, and the first polarization transformation component 6022 correspond to the polarization module 20. In other words, a possible structure of the polarization module 20 includes the unidirectional conduction component 601, the optical antenna 6021, and the first polarization transformation component 6022. In FIG. 14, 1401 represents a polarization direction of a signal light input by the beam splitting module 10, 1402 represents a polarization direction of a first signal light, 1403 represents a polarization direction of a second signal light, and 1404 represents a polarization direction of a third signal light. Functions of all components in FIG. 14 are as follows.

The signal generator 1101 is configured to modulate the laser 1102. A modulation method of the laser 1102 may be direct modulation or external modulation performed by using a modulator, and a modulation mode may be frequency-modulated continuous wave, phase encoding, or the like. In some embodiments, a structure of the signal generator 1101 for modulating the laser 1102 may be alternative as follows: A laser signal output by the laser 1102 enters a modulator; and the modulator modulates the input laser signal, and outputs a modulated laser signal to the amplifier 1103. For example, the modulator modulates, based on a modulation signal input by the signal generator, the laser signal output by the laser 1102.

The laser 1102 is configured to output a laser signal to the amplifier 1103. The laser 1102 may be a narrow-linewidth laser, such as a semiconductor laser, a fiber laser, or a laser of another type.

The amplifier 1103 is configured to amplify an input laser signal, and output an amplified laser signal to the beam splitter 101. The amplifier 1103 may be an optical amplifier, for example, an erbium-doped fiber amplifier (erbium doped fiber amplifier, EDFA), a semiconductor optical amplifier (semiconductor optical amplifier, SOA), or an optical amplifier of another type.

The beam splitting module 10 is configured to perform beam splitting processing on the input signal light to obtain the first signal light and the second signal light, output the first signal light to the unidirectional conduction component 601, and output the second signal light to the frequency mixer 40. In this embodiment of this application, the polarization state of the first signal light and the polarization state of the second signal light are orthogonal.

The unidirectional conduction component 601 is configured to output the first signal light from the beam splitting module 10 to the optical antenna 6021.

The optical antenna 6021 is configured to output, to the first polarization transformation component 6022, a signal light obtained after at least collimation processing is performed on the first signal light.

The first polarization transformation component 6022 is configured to: perform first polarization processing on the first signal light obtained after the collimation processing; output a transmitted signal light obtained after the first polarization processing is performed on the first signal light obtained after the collimation processing; receive a reflected signal light; and output, to the optical antenna 6021, a third signal light obtained after second polarization processing is performed on the reflected signal light. In other words, the first polarization transformation component 6022 is configured to perform the first polarization processing on the first signal light obtained after the collimation processing, and perform the second polarization processing on the reflected signal light. The reflected signal light is a signal light that is transmitted to any object and returned. The first signal light passes through the optical antenna 6021 and then passes through the first polarization transformation component 6022, and becomes a circularly polarized light or an elliptically polarized light (namely, the transmitted signal light), which is transmitted to any object to generate the reflected signal light. The reflected signal light returned by any object passes through the first polarization transformation component 6022 again, becomes the third signal light, and enters the optical antenna 6021.

The optical antenna 6021 is configured to output the third signal light to the unidirectional conduction component 601. After receiving the third signal light, the optical antenna 6021 sends the third signal light back to the unidirectional conduction component 601.

The unidirectional conduction component 601 is configured to output the third signal light to the frequency mixer 40. Because a polarization state of the first signal light has changed from a polarization state 1 to a polarization state 2, when the third signal light returns to the unidirectional conduction component 601, the third signal light does not return along an original path, but is reflected to the frequency mixer 40. The polarization state 1 is a polarization state of the first signal light, for example, vertical polarization. The polarization state 2 is a polarization state of the third signal light, for example, horizontal polarization.

The frequency mixer 40 is configured to perform frequency mixing on the second signal light (the local oscillator light) and the third signal light to obtain a mixed signal. A polarization state of the second signal light and the polarization state of the third signal light are the same. The frequency mixer 40 is a non-polarization frequency mixer component. Regardless of a depolarization effect of the signal light transmitted by any object, polarization directions of two lights entering the frequency mixer 40, namely, the second signal light and the third signal light, are the same.

The detector 1104 is configured to detect the mixed signal obtained after the frequency mixer 40 performs the frequency mixing processing. The detector 1104 may be a PIN detector, an avalanche photodiode (avalanche photon diode, APD) detector, a balanced detector, or the like.

The ADC 1105 is configured to sample the mixed signal detected by the detector 1104, and send the sampled signal to the processing unit 1106. In other words, after being sampled by the ADC 1105, the mixed signal detected by the detector 1104 is sent to the processing unit 1106 for subsequent signal processing.

The processing unit 1106 is configured to perform subsequent signal processing on the sampled signal to obtain information such as a location and a speed of a detected object.

In some embodiments, a structure of the polarization module 20 in FIG. 14 may be replaced with a structure of the polarization module 20 in FIG. 12. In some embodiments, the beam splitting module 10 in FIG. 14 may output the second signal light to the second polarization transformation component 102. The second polarization transformation component 102 outputs, to the frequency mixer 40, the fourth signal light obtained after at least the third polarization processing is performed on the second signal light.

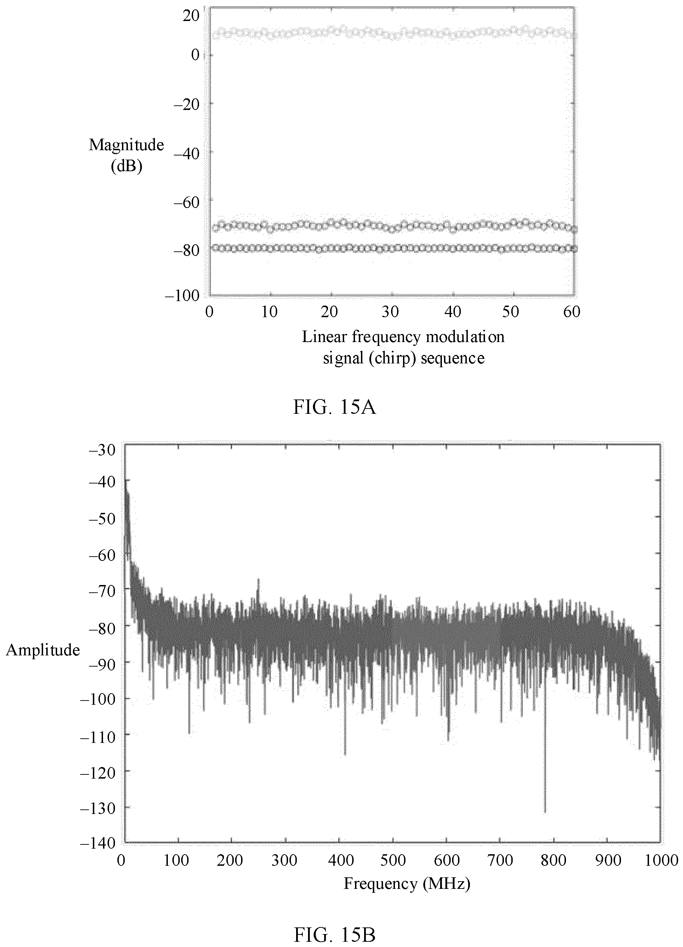

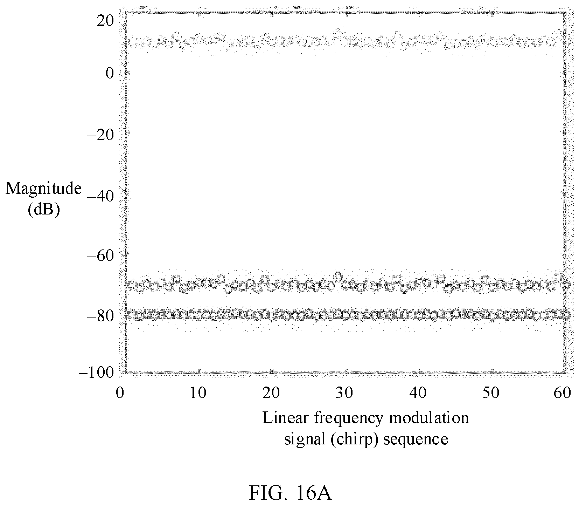

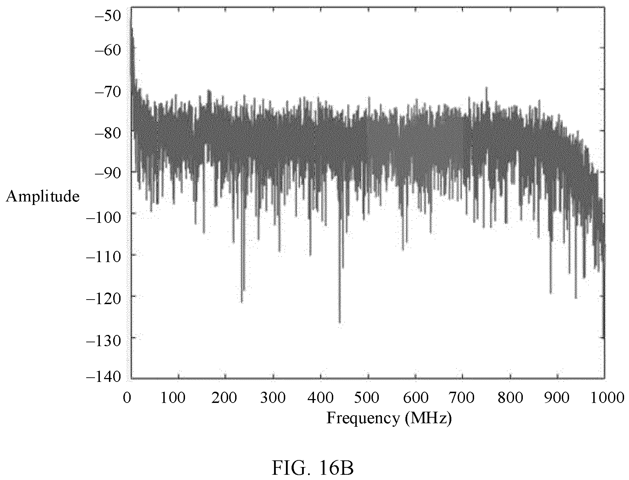

FIG. 15A and FIG. 15B show examples of test results of a coaxial transceiver detection system using a non-polarization component (a circulator) as a non-reciprocal component. FIG. 15A shows signal and noise levels measured for a plurality of times by a coaxial transceiver detection system using a non-polarization component, and FIG. 15B shows a spectrum obtained after fast Fourier transform (fast Fourier transform, FFT). It can be seen that at a low frequency (short range), there is a crosstalk signal of about -40 dBm, which is far greater than a target echo signal level between 200 MHz and 300 MHz. The crosstalk signal not only makes it very difficult to detect a short-range signal, but also increases a noise floor level throughout a range from a low frequency to a medium frequency. FIG. 16A and FIG. 16B show examples of test results of a coaxial transceiver detection system using a polarization component as a non-reciprocal component. Under same parameters and conditions, a polarization component is replaced as a non-reciprocal component to be used in a coaxial transceiver detection system (that is, the detection system provided in this application is used). Test results are shown in FIG. 15A and FIG. 15B. It can be seen from FIG. 16A that, after accurate adjustment, a level of a crosstalk signal in a signal spectrum is reduced from -40 dBm to -50 dBm, with a reduction of nearly 10 dB. Because the polarization component effectively reduces the crosstalk caused by the reflected light, a level of the crosstalk signal is significantly reduced, which brings some benefits to both detection of short-range signals and reduction of a noise level in a range from the low frequency to the medium frequency.

In addition, because the crosstalk signal is far greater than a signal level, a magnitude of a time-domain signal depends more on a magnitude of the crosstalk signal. However, a reduction of the level of a frequency-domain crosstalk signal means that the magnitude of the time-domain signal is also reduced accordingly. In this way, a back-end processed ADC can reduce a quantization range, thereby reducing (least significant bit, LSB) at a fixed number of bits, thereby reducing quantization noise. It should be noted that the foregoing results are only schematic diagrams of effects under the test condition. A trend is similar but the results may be slightly different under other conditions.

To sum up, the detection system provided in this embodiment effectively reduces a problem of crosstalk caused by the reflected light and characteristics of the component by using a polarization component.

This application provides a Lidar system. The Lidar system includes any detection system provided in this application. The detection system provided in this application is applicable to a "line-transmitting and line-receiving" Lidar system, an "area-transmitting and area-receiving" Lidar system, a "spot-transmitting and spot-receiving" Lidar system, or the like. FIG. 10 may be considered as an example of a Lidar system according to this application.

This application provides a terminal device. The terminal device includes the detection system provided in this application. For example, the terminal device is an intelligent vehicle (or an autonomous driving apparatus), and one or more detection systems provided in this application are deployed in the intelligent vehicle.

This application provides a detection apparatus, including at least one laser, at least one detector, and any detection system provided in this application.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A detection system, comprising a beam splitting module, a polarization module, and a frequency mixer, wherein
the beam splitting module (10) is configured to perform beam splitting processing on an input signal light to obtain a first signal light and a second signal light;
the polarization module (20) is configured to: output a transmitted signal light obtained after at least first polarization processing is performed on the first signal light; and obtain a reflected signal light of the transmitted signal light, and output a third signal light obtained after at least second polarization processing is performed on the reflected signal light; and
the frequency mixer (40) is configured to perform frequency mixing processing on the second signal light and the third signal light, or is configured to perform frequency mixing processing on the third signal light and a fourth signal light obtained after at least third polarization processing is performed on the second signal light.

2. The detection system according to claim 1, wherein the frequency mixer (40) is a polarization frequency mixer, and a polarization state of the second signal light and a polarization state of the third signal light are orthogonal; or the frequency mixer (40) is a non-polarization frequency mixer, and a polarization state of the fourth signal light and a polarization state of the third signal light are the same.

3. The detection system according to claim 1, wherein the polarization module comprises a polarization transformation module (602) and a unidirectional conduction component (601);
the unidirectional conduction component (601) is configured to output the first signal light to the polarization transformation module, and is configured to output the third signal light to the frequency mixer (40); and
the polarization transformation module (602) is configured to perform the first polarization processing on the first signal light, and is configured to perform the second polarization processing on the reflected signal light.

4. The detection system according to claim 3, wherein
the unidirectional conduction component (601) is further configured to reflect, filter, or absorb a signal light in a first polarization state entering from a first direction, wherein the first direction is an input direction of the third signal light, and the first polarization state is different from a polarization state of the third signal light.

5. The detection system according to claim 3, wherein the unidirectional conduction component (601) comprises at least one reflective surface, wherein
the unidirectional conduction component (601) is configured to reflect the third signal light from a first reflective surface to the frequency mixer; and/or
the unidirectional conduction component (601) is configured to reflect, from a second reflective surface, a signal light in a first polarization state entering from a first direction, wherein the first direction is an input direction of the third signal light, the first reflective surface is different from the second reflective surface, and the first polarization state is different from a polarization state of the third signal light.

6. The detection system according to any one of claims 3 to 5, wherein the polarization transformation module (602) comprises an optical antenna (6021, 6024) and a first polarization transformation component (6022, 6023);
the optical antenna (6021, 6024) is configured to output, to the first polarization transformation component (6022, 6023), a signal light obtained after at least collimation processing is performed on the first signal light, and is configured to output the third signal light to the unidirectional conduction component (601); and
the first polarization transformation component (6022, 6023) is configured to perform the first polarization processing on the first signal light obtained after the collimation processing, and is configured to output the third signal light obtained after the second polarization processing is performed on the reflected signal light; or
the first polarization transformation component (6022, 6023) is configured to output, to the optical antenna (6021, 6024), a fifth signal light obtained after the first polarization processing is performed on the first signal light, and is configured to perform the second polarization processing on the reflected signal light; and
the optical antenna (6021, 6024) is configured to output the transmitted signal light obtained after at least collimation processing is performed on the fifth signal light.

7. The detection system according to any one of claims 1 to 6, wherein the beam splitting module (10) comprises a beam splitter (101) and a second polarization transformation component (102);
the beam splitter (101) is configured to perform beam splitting processing on an input signal light to obtain the first signal light and the second signal light; and
the second polarization transformation component (102) is configured to output, to the frequency mixer (40), the fourth signal light obtained after at least the third polarization processing is performed on the second signal light.

8. The detection system according to any one of claims 1 to 6, wherein a polarization state of the first signal light and the polarization state of the second signal light are the same.

9. The detection system according to any one of claims 1 to 6, wherein the beam splitting module (10) is a polarization beam splitter; and
a polarization state of the first signal light and the polarization state of the second signal light are orthogonal, and a polarization state of the input signal light and the polarization state of the first signal light are not orthogonal and not parallel.

10. The detection system according to any one of claims 1 to 9, wherein the detection system comprises a transmitting optical path and a receiving optical path, and the transmitting optical path and the receiving optical path are arranged in a coaxial manner.

11. A terminal device, comprising the detection system according to any one of claims 1 to 10.

12. A detection apparatus, comprising at least one laser, at least one detector, and the detection system according to any one of claims 1 to 9.
